# EUROPÄISCHE PATENTSCHRIFT

(11) **EP 1 671 051 B1**
(45) Veröffentlichungstag und Bekanntmachung des Hinweises auf die Patenterteilung: **24.01.2007**
(21) Anmeldenummer: 04765038.7
(22) Anmeldetag: 10.09.2004
(51) Int. Cl.: F16H 13/04

(54) **REIBRADGETRIEBE FÜR EIN GESONDERTES NEBENAGGREGAT EINER MIT RIEMENGETRIEBENEN HILFSAGGREGATEN AUSGERÜSTETEN BRENNKRAFTMASCHINE**
FRICTION GEAR FOR A SEPARATE ACCESSORY OF A COMBUSTION ENGINE EQUIPPED WITH BELT-DRIVEN AUXILIARY UNITS
ENGRENAGE A FRICTION POUR GROUPE SECONDAIRE SEPARE D'UN MOTEUR A COMBUSTION INTERNE EQUIPE DE GROUPES AUXILIAIRES ENTRAINES PAR COURROIE

(30) Priorität: 07.10.2003 DE 10346425
(43) Veröffentlichungstag der Anmeldung: 21.06.2006
(73) Patentinhaber: Bayerische Motoren Werke Aktiengesellschaft, 80809 München (DE)
(72) Erfinder: LEMBERGER, Heinz, 85774 Unterföhring (DE)
(74) Vertreter: Bücken, Helmut
(86) Internationale Anmeldenummer: PCT/EP2004/010108
(87) Internationale Veröffentlichungsnummer: WO 2005/038299

(56) Entgegenhaltungen:
- DE-A- 3 934 884
- GB-A- 461 603
- US-A- 2 823 546
- US-A- 3 297 010

## Beschreibung

Die Erfindung bezieht sich auf ein Reibradgetriebe für ein gesondertes Nebenaggregat einer mit riemengetriebenen Hilfsaggregaten ausgerüsteten Brennkraftmaschine, das ein permanent oder gesteuert in Antriebsverbindung mit einem Antriebsrad des Nebenaggregates und einem Riemen eines Riementriebes der Brennkraftmaschine stehendes bzw. bringbares Reibrad umfasst, wobei das über einen maschinenseitig angelenkten Schwenkarm mittels einer Steuereinrichtung in/außer Antriebsverbindung gehaltene bzw. steuerbare Reibrad mit einer Schutzvorrichtung versehen ist, die bereichsweise mit dem Schwenkarm in Verbindung steht.

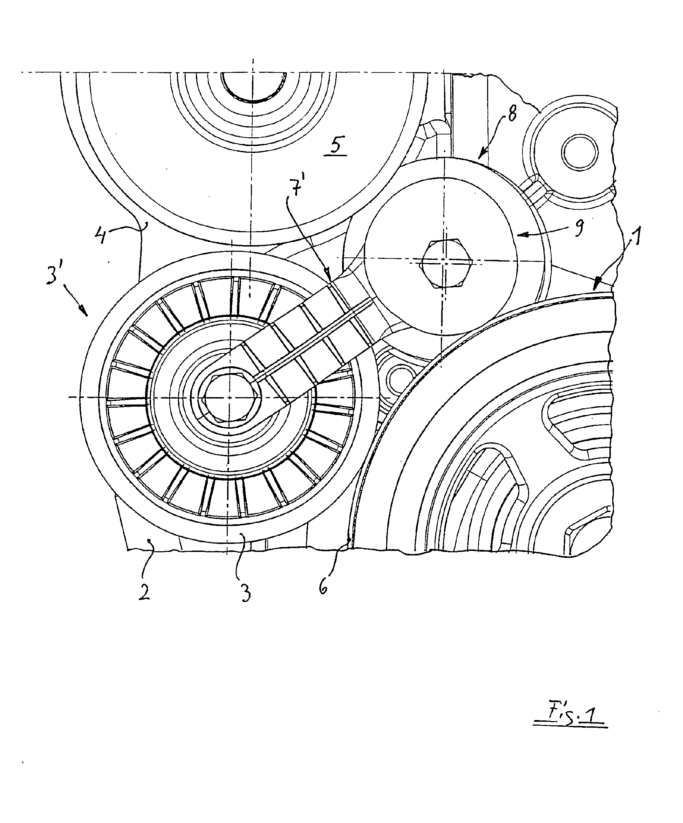

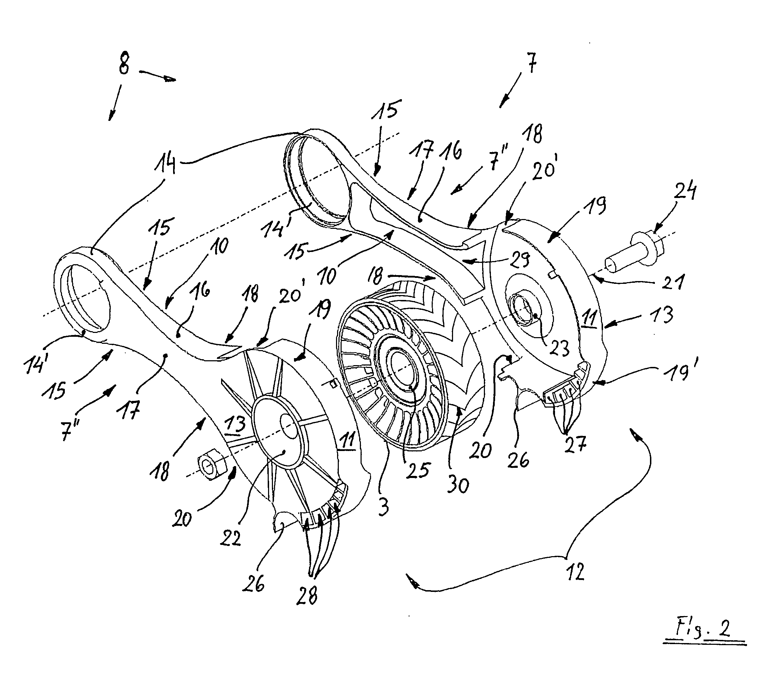

Ein derartiges Reibradgetriebe wurde in der noch nicht veröffentlichten deutschen Patentanmeldung 103 30 672 vorgeschlagen, wobei der aus den Fig.2 und 3 erkennbare Schwenkarm derart gestaltet ist dieser in perspektivischer Ansicht in Fig. 4 der weiteren noch nicht veröffentlichen deutschen Patentanmeldung 103 09 061 erkennbar ist, nämlich ein Schwenkarm mit einem Lagerauge, an dem zwei das Reibrad tragende Führungshebel angeordnet sind. Wie aus Fig.2 der o.g. vorerwähnten P 103 30 672 ersichtlich, ist dem maschinenfernen Führungshebel eine Abdeckung zugeordnet, die mit einem das Reibrad einseitig abdeckenden Schutzgehäuse einstückig verbunden ist.

Aus der DE 39 34 884 ein Reibradgetriebe mit des Merkmalen des Oberbegriffes des Anspruches 1 bekannt.

Der Erfindung liegt die Aufgabe zugrunde, Schwenkarm und Reibrad-Schutzvorrichtung zu einem einzigen Bauteil von einfachem Aufbau und günstiger Herstellung weiterzubilden.

Diese Aufgabe ist mit dem Patentanspruch 1 dadurch gelöst, dass ein als Hohlprofil gestalteter Schwenkarm einerseits ein einteilig angeformtes, flachzylindrisch gestaltetes Gehäuse als eine im wesentlichen geschlossene Reibrad-Schutzvorrichtung mit zwischen Gehäusestirnwänden drehbeweglich anordbarem Reibrad aufweist und andererseits eine einteilig angeformte Anlenkstelle, wobei der mit dem Schutzgehäuse und der Anlenkstelle ein Ganzes bildende Schwenkarm über zumindest eine Längsunterteilung zusammmensetzbar ausgebildet ist

Mit der Erfindung ist in vorteilhafter Weise ein einziges Bauteil in einfachem Aufbau erzielt.

Eine den einfachen Aufbau auch im Hinblick auf eine hohe Festigkeit vorteilhaft unterstützende Gestaltung ist gemäß einem weiteren Vorschlag dadurch erreicht, dass das Schutzgehäuse mit der als ein Lagerauge gestalteten Anlenkstelle über ein einziges Armelement des Schwenkarmes verbunden ist mit einem im Querschnitt kastenförmigen, hochkant angeordneten Hohlprofil. Gegenüber z.B. zwei Armelementen ist mit einem einzigen Armelement ferner eine flache ,wenig Einbauraum beanspruchende Gestaltung gefunden.

Für eine einen günstigen Kraftfluss in dem einzigen Armelement bewirkende Gestaltung ist ferner vorgesehen, dass das Lagerauge mit relativ starker Lagerwandung mittels angepassten Übergängen mit Deckseiten des Hohlprofils des Armelementes in einstückiger Verbindung steht, wobei das Hohlprofil über eine umfänglich geschlossene Lagerwandung augenseitig verschlossen ist, wodurch in vorteilhafter Weise die Drehsteifigkeit des Armelementes im Anschlussbereich an das Lagerauge erhöht ist.

Ein vorteilhaft festigkeitsmäßiges Zusammenwirken von Armelement und Schutzgehäuse ist im weiteren dadurch erzielt, dass die Deckseiten zum Hohlprofil ergänzende Seitenbegrenzungen bündig mit den Stirnseiten des Schutzgehäuses angeordnet sind, und die Deckseiten des Hohlprofils ferner verrundete Übergänge in den Außenumfang des Schutzgehäuses bilden, wobei den gehäuseseitigen Anschlussbereichen der Übergänge benachbart im Gehäuse-Außenumfang Kontaktöffnungen für das Reibrad mit dem Riemen und dem Nebenaggregate - Antriebsrad angeordnet sind.

Ein vorteilhaft steifes Schutzgehäuse ist mit einer weiteren Ausgestaltung der Erfindung dadurch erreicht, dass in die Stirnseiten des Schutzgehäuses zur Reibradachse koaxiale Vertiefungen eingeformt sind mit an den Gehäuseinnenseiten zugeordneten Distanzringen, die mittels einer Verschraubung gegen einen inneren Lagerring des Reibrades verspannt angeordnet sind. Die Vertiefungen sind vorzugsweise kegelstumpfartig gestaltet und derart vertieft ausgebildet, dass die Verschraubung an beiden Enden nicht über die Gehäusestirnseiten vorsteht für eine im wesentlichen vorteilhaft glattflächige Gestaltung des Schutzgehäuses.

Zur Erzielung eines einwandfreien Reibrad-Betriebes ist das Schutzgehäuse gemäß der vorerwähnten deutschen Patentanmeldung 103 30 672 zusätzlich derart ausgebildet, dass der riemenseitigen Kontaktöffnung am Außenumfang des Schutzgehäuses eine den Einlaufspalt zwischen Reibrad und Riemen von abgeschleuderten Partikeln und Flüssigkeitsteilchen im wesentlichen freihaltende Abschereinrichtung zugeordnet ist. Damit ist insbesondere ein im Reibrad-Betrieb die jeweilige reibschlüssige Antriebsverbindung störender Flüssigkeitsfilm wesentlich reduziert.

Diesem Ziel dient auch das weitere Ausgestaltungsmerkmal, wonach das Schutzgehäuse gegen die Reibrad-Drehrichtung von der riemenseitigen Kontaktöffnung beabstandet am Außenumfang einen radial nach außen gesetzten Umfangsabschnitt aufweist, der mit in Drehrichtung des Reibrades in gegenseitigem Abstand angeordneten Scherwänden ausgerüstet ist, wobei beide Stirnseiten des Schutzgehäuses jeweils zwischen den Scherwänden mit Ablauföffnungen für eine vom drehenden Reibrad abgeschleuderte Flüssigkeit ausgebildet sind.

Für eine vorteilhaft einfache Fertigung bei gleichzeitig vorteilhaft hoch belastbarem Aufbau des erfindungsgemäß als ein Ganzes gestalteten Schwenkarmes bezieht sich ein weiterer Vorschlag darauf, dass der Schwenkarm durch eine Längsunterteilung aus zwei im wesentlichen hälftigen Schalen aufgebaut ist, die lösbar oder unlösbar miteinander verbunden sind. Als lösbare Verbindungen kommen vorzugsweise Rastverbindungen in Betracht bei ausreichender Elastizität des für den Schwenkarm gewählten Werkstoffes, wobei mit der als Achse des Reibrades dienenden Verschraubung eine Sicherung für eine jeweilige Rastverbindung gegeben ist.
Für unlösbare Verbindungen sind je nach Werkstoffwahl für den Schwenkarm stoffschlüssige Verbindungen wie Schweißen oder Löten zu nennen, ferner können die Schwenkarm - Halbschalen auch miteinander verklebt sein.

Hinsichtlich einer vorteilhaft einfachen Fertigung mit dem zusätzlichen Vorteil gezielt auf einfache Weise anzubringender Versteifungen zur Festigkeitssteigerung sind die etwa hälftigen Schwenkarm-Schalen jeweils als Spritzgussteile aus einem Leichtmetall oder aus einem faserverstärkten Kunststoff gebildet und insbesondere zur Festigkeitssteigerung miteinander stoffschlüssig verbunden nach vorausgehender Montage des Reibrades.

Mit dem Vorschlag eines schutzgehäuseseitig verschlossen ausgebildeten Hohlprofils des Schwenkarmes ist in dessen Armelement ein Hohlraum gebildet zur Aufnahme einer oder mehrerer gesonderter Einrichtungen, wie z.B. einer Steuerelektronik, eines Antriebselementes oder eines Dämpfer- oder Tilgerelementes für den erfindungsgemäßen Schwenkarm.

Die Erfindung ist anhand eines in der Zeichnung dargestellten Ausführungsbeispiels beschrieben. Es zeigt:
- Fig.1: einen lediglich abschnittsweise gezeigten Riementrieb mit einem Reibradgetriebe für ein gesondertes Nebenaggregat mit außer Eingriff gesteuertem Reibrad gemäß der ersten Darstellung in o.g. vorerwähten P 103 30 672,
- Fig.2: einen erfindungsgemäß als Ganzes gestalteten Schwenkarm aus in einer Explosionsdarstellung gezeigten Halbschalen.

Um eine leichtere Zuordnung des Anmeldegegenstandes zu ermöglichen, ist in Fig.1 eine Darstellung eines Riementriebes 1 für eine lediglich abschnittsweise gezeigte Brennkraftmaschine 2 gemäß vorerwähten P 103 30 672 wiederholt mit einem Reibradgetriebe 3' für ein gesondert an der Brennkraftmaschine 2 angeordnetes Nebenaggregat 4, das vorzugsweise eine Kühlmittelpumpe für den Kühlkreislauf der Brennkraftmaschine 2 ist.

Das ohne den Anmeldegegenstand gezeigte Reibradgetriebe 3' umfasst gemäß Fig.1 der vorerwähten P 103 30 672 ein permanent oder gesteuert in Antriebsverbindung mit einem Antriebsrad 5 des Nebenaggregates 4 und einem Riemen 6 des Riementriebes 1 der Brennkraftmaschine 2 stehendes bzw. bringbares Reibrad 3. Das über einen maschinenseitig angelenkten, gabelartigen Schwenkarm 7' mittels einer einen nicht gezeigten, in der Anlenkstelle. 8 angeordneten, drehfederbelasteten Exzenter umfassende Steuereinrichtung 9 in/außer Antriebsverbindung gehaltene bzw. steuerbare Reibrad 3 ist gemäß Fig.2 der o.g. vorerwähten P 103 30 672 mit einer Schutzvorrichtung versehen.

Um aufgabengemäß einen Schwenkarm und eine Reibrad - Schutzvorrichtung zu einem einzigen Bauteil von einfachem Aufbau und günstiger Herstellung weiterzubilden, weist ein als Hohlprofil 10 gestalteter Schwenkarm 7 einerseits ein einteilig angeformtes, flachzylindrisch gestaltetes Gehäuse 11 als eine im wesentlichen geschlossene Reibrad - Schutzvorrichtung 12 mit zwischen Gehäusestirnwänden 13 drehbeweglich anordbarem Reibrad 3 auf und andererseits eine einteilig angeformte Anlenkstelle 8, wobei der mit dem Schutzgehäuse 11 und der Anlenkstelle 8 ein Ganzes bildende Schwenkarm 7 über zumindest eine Längsunterteilung zusammensetzbar ausgebildet ist.

Wie aus Fig.2 ersichtlich, ist das Schutzgehäuse 11 mit der als ein Lagerauge 14 gestalteten Anlenkstelle 8 über ein einziges Armelement 7" des Schwenkarmes 7 verbunden, wobei das Armelement 7" ein im Querschnitt kastenförmiges, hochkant angeordnetes Hohlprofil 10 aufweist zur Erzielung eines biegesteifen Schwenkarmes 7.

Als weitere Maßnahme für einen steifen Schwenkarm 7 steht das mit einer relativ starken Lagerwandung 14' ausgebildete Lagerauge 14 mittels angepasster Übergänge 15 mit Deckseiten 16 des Hohlprofils 10 in einstückiger Verbindung, wobei das Hohlprofil 10 über eine umfänglich geschlossene Lagerwandung 14' lageraugenseitig verschlossen ist. Mit dieser Ausgestaltung ist eine torsionssteife Anbindung des Armelementes 7" an das Lagerauge 14 erzielt.

Um insbesondere Zugbelastungen vorteilhaft vom Armelement 7" in das Schutzgehäuse 11 einzuleiten, sind die Deckseiten 16 zum Hohlprofil 10 ergänzende Seitenbegrenzungen 17 bündig mit den Stirnseiten 13 des Schutzgehäuses 11 angeordnet. Ferner bilden die Deckseiten 16 verrundete Übergänge 18 in den Außenumfang 19 des Schutzgehäuses 11, wobei in den gehäuseseitigen Anschlussbereichen der Übergänge 18 benachbart im Gehäuse - Außenumfang 19 Kontaktöffnungen 20,20' für das Reibrad 3 zum reibschlüssigen Kontakt mit dem Riemen 6 und dem Antriebsrad 5 angeordnet sind.

Zur Aussteifung des Schutzgehäuses 11 sind in dessen Stirnseiten 13 zur Reibradachse 21 koaxiale Vertiefungen 22 eingeformt mit an den Gehäuseinnenseiten zugeordneten Distanzringen 23, die mittels einer Verschraubung 24 gegen einen inneren Lagerring 25 des Reibrades 3 verspannt angeordnet sind.

Um eine einwandfreie reibschlüssige Antriebsverbindung des Reibrades 3 bei mit Wasser befrachtetem Riemen 6 sicher zu stellen, ist der riemenseitigen Kontaktöffnung 20 am Außenumfang 19 des Schutzgehäuses 11 eine den Einlaufspalt zwischen Reibrad 3 und Riemen 6 im wesentlichen von abgeschleuderten Wasserteilchen freihaltende Abschereinrichtung 26 zugeordnet. Um des weiteren trotzdem vom Reibrad 3 am Außenumfang mitgenommenes Wasser im wesentlichen vom Einlaufspalt fernzuhalten, weist das Schutzgehäuse 11 gegen die Reibrad - Drehrichtung von der riemenseitigen Kontaktöffnung 20 beabstandet am Außenumfang 19 einen radial nach außen gesetzten Umfangsabschnitt 19' auf, der mit in Drehrichtung des Reibrades 3 in gegenseitigem Abstand angeordneten Scherwänden 27 ausgerüstet ist. Zum Ablauf des gegen die Scherwände 27 vom Reibrad 3 abgeschleuderten Wassers sind beide Stirnseiten 13 des Schutzgehäuses 11 jeweils zwischen den Scherwänden 27 mit Ablauföffnungen 28 ausgebildet.

Eine einen einfachen Aufbau sowie eine günstige Herstellung unterstützende Gestaltung des erfindungsgemäß ein Ganzes mit der Anlenkstelle 8 und dem Schutzgehäuse 11 bildenden Schwenkarmes 7 ist mittels einer vorteilhaften Längsunterteilung erzielt, die vorzugsweise eine Teilung des Schwenkarmes 7 in zwei hälftige Schalen 70,70' ergibt. Deren Ausbildung kann so gewählt sein, dass die Schalen 70,70' für eine lösbare oder eine unlösbare Verbindung vorbereitet sind.

Die Herstellung des erfindungsgemäß einteilig gestalteten Schwenkarmes 7 aus zwei etwa hälftigen Schalen 70,70' ermöglicht deren vorteilhafte Fertigung jeweils als Spritzgussteile aus einem Werkstoff von relativ geringem Gewicht wie beispielsweise einem Leichtmetall oder einem faserverstärkten Kunststoff. Im Rahmen der Erfindung können die Schalen 70,70' auch als Blechpressteile gefertigt sein. Weiter bleibt es im Rahmen der Erfindung, anstelle zweier hälftiger Schalen 70,70' lediglich eine einzige, nicht gezeigte Schale auszubilden, deren offene Seite mit einem Deckel verschlossen ist.

Zur Erzielung eines biegesteifen Schwenkarmes 7 sind die ihn bildenden Halbschalen 70,70' miteinander stoffschlüssig verbunden.

Mit einem zusätzlich schutzgehäuseseitig verschlossen ausgebildeten Hohlprofil 10 - nicht dargestellt - verfügt der erfindungsgemäße Schwenkarm 7 über einen Hohlraum 29, der zur Aufnahme einer oder mehrerer Einrichtungen dienen kann, wie beispielsweise eines Dämpfer- oder Tilgerelementes für den Schwenkarm 7.

Über das Lagerauge 14 kann der Schwenkarm 7 mit einem um eine maschinenfeste Achse drehbeweglich angeordneten Exzenter zusammenwirken, wobei der mittels einer vorgespannten Drehfeder angetriebene Exzenter über den Schwenkarm 7 das Reibrad 3 in permanenter Antriebsverbindung mit dem Antriebsrad 5 des Nebenaggregates 4 und dem Riemen 6 des Riementriebes 1 der Brennkraftmaschine 2 hält, gemäß dem Anmeldegegenstand der noch nicht veröffentlichen P 102 55 074.

Die mit dem Exzenter gegebene, selbsttätig wirksame Nachstellbarkeit des Reibrades 3 kann durch einen am Exzenter gegen die Wirkung der Drehfeder gesteuert antreibenden Servomotor gezielt aufgehoben werden zur gewünschten Unterbrechung der vorbeschriebenen Antriebsverbindung vor allem beim und zeitlich begrenzt nach dem Kaltstart einer flüssigkeitsgekühlten Brennkraftmaschine 2 zur Verringerung der Startleistung sowie zur schnelleren Erwärmung der Brennkraftmaschine 2 durch fehlende Kühlmittelumwälzung aufgrund der stillgesetzten Kühlmittelpumpe als Nebenaggregat 4.

So wurde für einen derartigen Servomotor mit der noch nicht veröffentlichen P 103 09 063 z.B. ein elektrischer Schrittschaltmotor vorgeschlagen, der über ein in beiden Drehrichtungen ohne Selbsthemmung drehbares Zahnradgetriebe mit dem Exzenter in Antriebsverbindung steht, wobei dieser Servomotor mit dem Zahnradgetriebe zur Erzielung einer Failsafe - Funktion unter Zwischenschaltung einer lediglich in Antriebsrichtung drehfest sperrenden Freilaufeinrichtung in Antriebsverbindung steht.

Bei einer anderen vorgeschlagenen Bauart eines Servomotors ist die Drehbewegung des Exzenters mittels einer Hubbewegung des Exzenters längs einer Steilgewindeführung bewirkt. Beim Gegenstand der noch nicht veröffentlichen P 102 55 075 ist die Hubbewegung des Exzenters mittels eines Elektromagneten gesteuert. Demgegenüber ist beim Anmeldegegenstand der vorerwähten P 103 09 061 die Hubbewegung unter Zwischenschaltung einer Membrane mittels eines pneumatischen oder hydraulischen Druckmediums erzielt.

Eine weitere Gestaltung eines Servomotors zeigt und beschreibt die deutsche noch nicht veröffentlichen Patentanmeldung 102 55 073, gemäß der ein Exzenter als ein hydraulisch beaufschlagter Drehkolben ausgebildet ist.

Schließlich ist das Reibrad 3 gemäß der noch nicht veröffentlichen P103 09 062 am Außenumfang mit einer Lauffläche aus flüssigkeitsabstoßendem Gummi, Kunststoff oder Elastomer ausgebildet, wobei die Lauffläche mit Draingenuten 30 zur Reduzierung einer Flüssigkeitsauflage versehen ist. Weiter kann die Lauffläche des Reibrades 3 ballig ausgeführt sein, um zu vermeiden, dass das Reibrad 3 mit einem seiner Reibpartner aufgrund von Maß - und Fertigungsabweichungen über eine seiner Randkanten läuft mit dem Nachteil eines erhöhten Verschleißes.

## Patentansprüche

1. Reibradgetriebe für ein gesondertes Nebenaggregat einer mit riemengetriebenen Hilfsaggregaten ausgerüsteten Brennkraftmaschine,
- das ein permanent oder gesteuert in Antriebsverbindung mit einem Antriebsrad (5) des Nebenaggregates (4) und einem Riemen (6) eines Riementriebes (1) der Brennkraftmaschine (2) stehendes bzw. bringbares Reibrad (3) umfasst, **dadurch gekennzeichnet dass**
- das über einen maschinenseitig angelenkten Schwenkarm mittels einer Steuereinrichtung (9) in/außer Antriebsverbindung gehaltene bzw. steuerbare Reibrad (3) mit einer Schutzvorrichtung versehen ist, die
- bereichsweise mit dem Schwenkarm in Verbindung steht,
- dass ein als Hohlprofil (10) gestalteter Schwenkarm (7) einerseits ein einteilig angeformtes, flachzylindrisch gestaltetes Gehäuse (11) als eine im wesentlichen geschlossene Reibrad - Schutzvorrichtung (12) mit zwischen Gehäusestirnwänden (13) drehbeweglich anordbarem Reibrad (3) aufweist und
- andererseits eine einteilig angeformte Anlenkstelle (8), wobei
- der mit dem Schutzgehäuse (11) und der Anlenkstelle (8) ein Ganzes bildende Schwenkarm (7) über zumindest eine Längsunterteilung zusammensetzbar ausgebildet ist.

2. Schwenkarm nach Anspruch 1, **dadurch gekennzeichnet,**
- **dass** das Schutzgehäuse (11) mit der als ein Lagerauge (14) gestalteten Anlenkstelle (8) über ein einziges Armelement (7") des Schwenkarmes (7) verbunden ist mit einem im Querschnitt kastenförmigen, hochkant angeordneten Hohlprofil (10).

3. Schwenkarm nach Anspruch 1 und 2, **dadurch gekennzeichnet,**
- **dass** das Lagerauge (14) mit relativ starker Lagerwandung (14') mittels angepassten Übergängen (15) mit Deckseiten (16) des Hohlprofils (10) des Armelementes (7") in einstückiger Verbindung steht, wobei
- das Hohlprofil (10) über eine umfänglich geschlossene Lagerwandung (14') lageraugenseitig verschlossen ist.

4. Schwenkarm nach den Ansprüchen 1 - 3, **dadurch gekennzeichnet,**
- **dass** die Deckseiten (16) zum Hohlprofil (10) ergänzende Seitenbegrenzungen (17) bündig mit den Stirnseiten (13) des Schutzgehäuses (11) angeordnet sind, und
- die Deckseiten (16) des Hohlprofils (10) ferner verrundete Übergänge (18) in den Außenumfang (19) des Schutzgehäuses (11) bilden, wobei in
- den gehäuseseitigen Anschlussbereichen der Übergänge (18) benachbart im Gehäuse - Außenumfang (19) Kontaktöffnungen (20,20') für das Reibrad (3) mit dem Riemen (6) und dem Antriebsrad (5) angeordnet sind.

5. Schwenkarm nach den Ansprüchen 1 - 4, **dadurch gekennzeichnet,**
- **dass** in die Stirnseiten (13) des Schutzgehäuses (11) zur Reibradachse (21) koaxiale Vertiefungen (22) eingeformt sind mit an den Gehäuseinnenseiten zugeordneten Distanzringen (23), die
- mittels einer Verschraubung (24) gegen einen inneren Lagerring (25) des Reibrades (3) verspannt angeordnet sind.

6. Schwenkarm nach den Ansprüchen 1 - 5, **dadurch gekennzeichnet,**
- **dass** der riemenseitigen Kontaktöffnung (20) am Außenumfang (19) des Schutzgehäuses (11) eine den Einlaufspalt zwischen Reibrad (3) und Riemen (6) von abgeschleuderten Partikeln und Flüssigkeitsteilchen im wesentlichen freihaltende Abschereinrichtung (26) zugeordnet ist.

7. Schwenkarm nach den Ansprüchen 1 - 6, **dadurch gekennzeichnet,**
- **dass** das Schutzgehäuse (11) gegen die Reibrad - Drehrichtung von der riemenseitigen Kontaktöffnung (20) beabstandet am Außenumfang (19) einen radial nach außen gesetzten Umfangsabschnitt (19') aufweist, der
- mit in Drehrichtung des Reibrades (3) in gegenseitigem Abstand angeordneten Scherwänden (27) ausgerüstet ist, wobei
- beide Stirnseiten (13) des Schutzgehäuses (11) jeweils zwischen den Scherwänden (27) mit Ablauföffnungen (28) für eine abgeschleuderte Flüssigkeit ausgebildet sind.

8. Schwenkarm nach den Ansprüchen 1 - 7, **gekennzeichnet durch** eine Längsunterteilung mit zwei im wesentlichen hälftigen Schalen (70.70'), die lösbar oder unlösbar miteinander verbunden sind.

9. Schwenkarm nach den Ansprüchen 1 - 8, **dadurch gekennzeichnet,**
- **dass** die hälftigen Schalen (70,70') jeweils als Spritzgussteile aus einem Leichtmetall oder aus einem faserverstärkten Kunststoff gebildet und insbesondere miteinander stoffschlüssig verbunden sind, oder
- **dass** sie als Blechpressteile ausgebildet sind.

10. Schwenkarm nach den Ansprüchen 1 - 9, **dadurch gekennzeichnet,**
- **dass** das schutzgehäuseseitig verschlossen ausgebildete Hohlprofil (10) einen Hohlraum (29) bildet zur Aufnahme einer oder mehrerer gesonderter Einrichtungen.

## Claims

1. A friction gear for a separate sub-unit of an internal combustion engine equipped with belt-driven auxiliary units,
- the gear comprising a friction wheel (3) being or adaptable to be brought into drive connection, permanently or in controlled manner, with a driving wheel (5) of the sub-unit (4) and with a belt (6) of a belt drive (1) of the engine (2),
**characterised in that**
- the friction wheel (3), which is held or movable in or out of control connection by a control device (9), via a swivel arm pivoted on the engine side, is provided with a protective device,
- parts of which are in contact with the swivel arm,
- a swivel arm (7) in the form of a hollow profile (10) at one end has a substantially enclosed friction-wheel protective device (12) in the form of an integrally moulded flat cylindrical casing (11), the friction wheel (3) being mounted for rotation between end walls (13) of the casing, and
- at the other end the swivel arm has an integrally moulded coupling place (8), wherein
- the swivel arm (7), which forms a whole in conjunction with the protective casing (11) and the coupling place (8), is longitudinally divided at least once and adapted to be assembled.

2. A swivel arm according to claim 1, **characterised in that**
- the protective casing (11) is connected to the coupling place (8), in the form of a bearing eyelet (14), by a single element (7") of the swivel arm (7), the element having a hollow profile (10) disposed on edge and box-like in cross-section.

3. A swivel arm according to claims 1 and 2, **characterised in that**
- the eyelet (14) has a relatively thick wall (14') integrally connected via suitable transitions (15) to surfaces (16) of the hollow profile (10) of the arm element (7"), wherein
- the hollow profile (10) is closed on the eyelet side by a peripherally enclosed wall (14').

4. A swivel arm according to claims 1 to 3, **characterised in that**
- side boundaries (17) which convert the surfaces (16) into a hollow profile (10) are flush with the end faces (13) of the protective casing (11), and
- the surfaces (16) of the hollow profile (10) also form rounded transitions (18) in the outer periphery (19) of the protective casing (11), wherein
- contact openings (20, 20') for the friction wheel (3) and the belt (6) and driving wheel (5) are disposed in the outer periphery (19) of the casing near the connecting regions of the transitions (18) on the casing side.

5. A swivel arm according to claims 1 to 4, **characterised in that**
- recesses (22) coaxial with the friction-wheel axis (21) are formed in the end faces (13) of the protective casing (11) and are associated with spacer rings (23) which are disposed on the insides of the casing and
- are clamped by screwing (24) against an inner ring bearing (25) of the friction wheel (3).

6. A swivel arm according to claims 1 to 5, **characterised in that**
- the contact opening (20) on the belt side on the outer periphery (19) of the protective casing (11) is associated with a shearing device (26) which keeps the inlet gap between the friction wheel (3) and belt (6) substantially free from thrown-off solid and liquid particles.

7. A swivel arm according to claims 1 to 6, **characterised in that**
- the protective casing (11) has a radially outwardly offset peripheral portion (19') on the outer periphery (19) at a distance from the belt-side contact opening (20) opposite the direction of rotation of the friction wheel,
- the peripheral portion (19') being equipped with shearing walls (27) spaced apart in the direction of rotation of the friction wheel (3), wherein
- the two end faces (13) of the protective casing (11) are formed with respective discharge openings (28) for thrown-off liquids between the shearing walls (27).

8. A swivel arm according to claims 1 to 7, **characterised by** a longitudinal division into two substantially half-shells (70, 70') releasably or non-releasably connected to one another.

9. A swivel arm according to claims 1 to 8, **characterised in that**
- the half-shells (70, 70') are injection-moulded from a light metal or a fibre-reinforced plastics material and connected to one another especially via the material, or
- are stamped sheet-metal parts.

10. A swivel arm according to claims 1 to 9, **characterised in that**
- the hollow profile (10), closed on the protective-casing side, forms a cavity (29) for holding one or more separate devices.

## Revendications

1. Engrenage à friction pour un groupe secondaire séparé d'un moteur à combustion interne équipé de groupes auxiliaires entraînés par courroie, comportant une roue de friction (3) qui est ou peut être mise en liaison d'entraînement permanente ou commandée avec une roue d'entraînement (5) du groupe secondaire (4) et une courroie (6) d'un entraînement à courroie (1) du moteur à combustion interne,
**caractérisé en ce que**
- la roue de friction (3) qui est maintenue ou peut être commandée par un dispositif de commande (9) en liaison d'entraînement ou non, par l'intermédiaire d'un bras oscillant articulé du côté du moteur, est équipée d'un dispositif de protection relié par zones avec le bras oscillant,
- un bras oscillant (7) ayant la forme d'un profilé creux (10), présente d'une part un boîtier (11) moulé monobloc et en forme de cylindre plat, qui constitue un dispositif de protection de roue de friction (12) essentiellement fermé, avec des parois frontales de boîtier (13) entre lesquelles peut être montée en rotation la roue de friction (3),
- le bras oscillant présente d'autre part un point d'articulation (8) moulé monobloc,
- le bras oscillant (7) forme un tout avec le boîtier de protection (11) et le point d'articulation (8), peut être réalisé par assemblage au moins le long d'une séparation longitudinale.

2. Bras oscillant selon la revendication 1,
**caractérisé en ce que**
le boîtier de protection (11) est relié au point d'articulation (8) ayant la forme d'un oeillet de palier (14) par un élément de bras (7") du bras oscillant (7), avec un profilé creux (10) présentant en coupe la forme d'un caisson à bords dressés.

3. Bras oscillant selon la revendication 1 ou 2,
**caractérisé en ce que**
- l'oeillet de palier (14), avec une paroi de palier relativement épaisse (14'), est en liaison monobloc par l'intermédiaire de transitions ajustées (15) avec les côtés de couverture (16) du profilé creux (10) de l'élément de bras (7"), et
- le profilé creux (10) est relié du côté de l'oeillet de palier par une paroi de palier (14') fermée à sa périphérie.

4. Bras oscillant selon les revendications 1 à 3,
**caractérisé en ce que**
- les limitations latérales (17) complétant les côtés de couverture (16) pour donner le profilé creux (10) sont alignées avec les faces frontales (13) du boîtier de protection (11),
- les côtés de couverture (16) du profilé creux (10) forment de plus des transitions arrondies (18) dans la périphérie externe (19) du boîtier de protection (11), et
- dans les zones de raccordement situées du côté du boîtier et proches des transitions, (18) la périphérie externe (19) du boîtier présente des ouvertures (20, 20') de contact de la roue de friction (3) avec la courroie (6) et avec la roue d'entraînement (5).

5. Bras oscillant selon les revendications 1 à 4,
**caractérisé en ce que**
dans les faces frontales (13) du boîtier de protection (11) sont formées des cavités (22) coaxiales avec la roue de friction (3), contenant des bagues d'espacement (23) qui sont associées aux faces internes du boîtier et montées par un filetage (24) en précontrainte contre une bague de palier (25) à l'intérieur de la roue de friction (3).

6. Bras oscillant selon les revendications 1 à 5,
**caractérisé en ce qu'**
à l'ouverture de contact (20) située du côté de la courroie sur la périphérie externe (19) du boîtier de protection (11), est associé un dispositif de cisaillement (26) qui maintient une fente d'entrée existant entre la roue de friction (3) et la courroie (6), essentiellement libre de particules projetées et de particules liquides.

7. Bras oscillant selon les revendications 1 à 6,
**caractérisé en ce que**
- le boîtier de protection (11) sur la périphérie externe (19), à une certaine distance de l'ouverture de contact (20) située du côté de la courroie dans le sens opposé à la roue de friction, présente une partie périphérique (19') située radialement vers l'extérieur et qui est équipée dans le sens de rotation de la roue de friction, à une distance opposée, de parois de cisaillement (27) espacées, et
- les deux faces frontales (13) du boîtier de protection (11) présentent chacune entre les parois de cisaillement (27) des ouvertures de sortie (28) pour les projections de liquide.

8. Bras oscillant selon les revendications 1 à 7,
**caractérisé par**
une séparation longitudinale entre deux demi-coquilles (70, 70') reliées entre elles de manière séparable ou inséparable.

9. Bras oscillant selon les revendications 1 à 8,
**caractérisé en ce que**
les demi-coquilles (70, 70') sont des pièces injectées en métal léger ou en matière plastique renforcée par des fibres, en étant reliées entre elles en particulier par la matière, ou des pièces en tôle formées à la presse.

10. Bras oscillant selon les revendications 1 à 9,
**caractérisé en ce que**
le profilé creux (10) fermé du côté du boîtier de protection, forme un volume creux (29) pour accueillir un ou plusieurs dispositifs spécifiques.
